# EUROPEAN PATENT APPLICATION

(11) **EP 0 551 984 A1**
(43) Date of publication of application: **21.07.1993**
(21) Application number: 93300080.4
(22) Date of filing: 06.01.1993
(51) Int. Cl.: G06K 7/10

(54) **Multiple focal length image recognition apparatus**

(30) Priority: 15.01.1992 US 821094
(71) Applicant: International Business Machines Corporation, Armonk, N.Y. 10504 (US)
(72) Inventor: Brigida, David Joseph, Boca Raton, Florida 33434 (US); Moore, Victor Stuart, Delray Beach Florida 33484 (US); Pate, Thomas Kent, Boca Raton, Florida 33433 (US)
(74) Representative: Burt, Roger James, Dr.

(57) **Abstract**

A scanning system capable of reading images such as bar codes placed over a range of distances from the scanning device with a single CCD (118) image receptor. The CCD (118) receives images through a multilens optical system (102). Each lens (104) is formed for a particular focal length such that the multilens assembly (102) covers a range of focal lengths. A particular lens (104) is selected by opening a window (112) in an LCD mask (110) which is in the light path of the CCD (118). As the bar code is moved farther or closer to the CCD scanner, the shutter mechanism (110) will select the proper portion of the lens (102) so that the bar code image remains in sufficient focus on the CCD for the bar code to be decoded.

## Description

The present invention relates to Image Recognition Apparatus having multiple focal lengths to allow recognition of bar codes placed at various distances from the apparatus.

Various image recognition apparatus have been constructed in the past. Most prominent of which are those that use rotating mirrors to generate a scanning pattern across a bar code so that a photo sensitive diode can be used to receive the reflected light from the scanning pattern and turn it into electrical signals that correspond to the light and dark bands of the bar code being scanned. The electrical signal can be possessed into a digital signal suitable for input to a computer, which in turn uses software to decipher the digital signal into the information represented in the previously mentioned scanned bar code. This type of scanning system is old and well known in the art. Limitations associated with this type of scanning device include tight mechanical requirements due to the high speed of rotation of the mirrors, which in turn limits the operating efficiency of such an apparatus. In addition, a motor is required to spin the mirror, and the space and angle occupied by the motor and mirror cause this variety of scanner to be by necessity large in size and weight.

A variation of the above described bar code scanner eliminates the scanning mirror by placing the photo sensing device on a rotating disk so that the sensing device itself scans through the light received from the bar code. In this way the bar code can be illuminated by any light source. This concept, however, also uses a motor (to spin the disk) and hence inherits the large size and weight characteristics found in scanning mirror systems.

Apparatus without moving parts have also been constructed to read bar codes. They all use image receptors, of one variety or another, that electrically scan the image focused on to their surfaces.

A method of scanning without moving parts is to focus an image at a known distance from the scanner onto an image receptor so that the bar code can be deciphered by a computer. However, this approach fails to read bar codes when the distance is not well defined.

The optical range over which a bar code can be read can be extended by a variation of this type of device. The extension is achieved by placing multiple image receptors behind a lens mechanism. As the bar code is moved in front of the lens it appears in focus on each image receptor at a different distance. By switching between the various receptors, the image can be kept in focus over a wider range than by using one receptor alone. Problems associated with this arrangement are the cost for the electrical circuitry to switch between image receptors, the logic needed to determine when to switch, and the expense of having multiple image receptors. In addition, it complicates the placement of multiple receptors behind the lens, thereby impacting size requirements.

The image receptors used for this type of device can be commonly available devices such as a light sensitive charge coupled device (CCD) which electronically scan a bar code placed at a known and fixed distance from the CCD device. The characteristics of a CCD require that the bar code be at a set distance to ensure that a sharp image is properly projected onto the CCD. CCD scanners can be used to read bar codes which have a high brightness or a background having a low brightness, and bar codes having a low brightness or a background having a high brightness. CCD scanners are well known in the art. This type of scanner requires logic and software to operate the CCD and to decode the electrical signals from the CCD into the information represented in the scanned bar code. A problem associated with this approach is that there is no mechanism to expand the focal range of the CCD device, so that the bar code could be deciphered when placed within a specified range from the CCD, rather than a fixed distance.

Hand held devices capable of reading bar codes on a curved or irregular surface are also known in the art. However, they are not able to read bar codes when the surface on which the bar code itself is moved a considerable distance from the scanner. This results in the same constraint as the bar code readers discussed above. Namely, the requirement that bar codes be positioned at a relatively fixed distance from the reader in order to be scanned.

The prior art has failed to show a small lightweight scanner with no moving parts capable of reading objects such as bar codes over a range of distances. In addition, attempts to provide a range of focal lengths by scanners has resulted in expensive systems with redundant image receptors and as well as redundant support circuitry.

In accordance with the present invention, there is now provided Image recognition apparatus, comprising: an image receptor comprising a surface for receiving an image and means for generating an electrical output signal as a function of the image received on the surface; characterised in that the apparatus further comprises: a plurality of lenses each for focusing the received image on the surface, each lens having a predetermined focal length; a shutter located in the light path to the lenses and the receptor, the shutter having a plurality of addressable, electrically actuable windows, each window being individually operable to transmit or block light to a corresponding one of the lenses; and a processor connected to the receptor and the shutter for sequentially actuating the windows to determine the one of the lenses providing the best available focal length for the received image as a function of the electrical output signal from the receptor.

In a preferred embodiment of the present invention, there is provided a scanning system capable of reading images such as bar codes over a range of distances is accomplished by a single image receptor device, such as a CCD, which receives images through a multilens optical system. Each lens is formed for a particular focal length such that the multilens assembly covers a range of focal lengths. A particular lens is in turn selected by opening a window in an LCD mask covering the light path of the multilens assembly.

Preferred embodiments of the present invention will now be described with reference to the accompanying drawings in which:
Figure 1 is a diagram showing the major components of the multilens image receptor device;
Figure 2 is a diagram illustrating operation of the invention with a first lens selected;
Figure 3 is a diagram illustrating operation of the invention with a second lens selected;
Figure 4 is a diagram illustrating operation of the invention with a third lens selected;
Figure 5 is a diagram showing the major elements of the system;
Figure 6 is a diagram illustrating operation of an alternative embodiment of the invention with a first lens selected;
Figure 7 is a diagram illustrating operation of an alternative embodiment of the invention with a second lens selected; and
Figure 8 is a diagram illustrating operation of an alternative embodiment of the invention with a third lens selected.

By way of general overview, the invention reads bar codes placed over a range of distances from the scanning device. The significance of the invention is that the range over which the bar code can be read is made greater than that achievable by fixed lens CCD systems today. This result is accomplished by manufacturing the lens device so that it has multiple focal points, and by using the LCD shutter mechanism to select the appropriate focal point so that the bar code image is kept in focus on the CCD scanner. As the bar code is moved farther or closer to the CCD scanner, the shutter mechanism will select the proper portion of the lens so that the bar code image remains in sufficient focus on the CCD for the bar code to be decoded. The shutter may be placed either in front of or behind the lens, whichever optically and mechanically best fits the situation. Further, other lenses may precede or follow the multiple focal point lens to better focus the bar code image on the CCD device. It would even be possible to have more than one multiple focal point lens and associated LCD shutter.

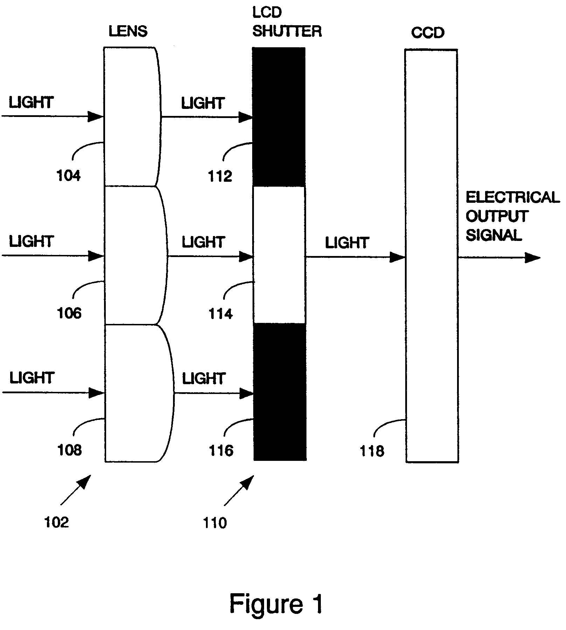

Figure 1 illustrates the multilens assembly 102, LCD shutter 110, and image receptor 118 used in the preferred embodiment of the invention. Since the image receptor used in the preferred embodiment is a CCD, for convenience it will be referred to as a CCD hereafter. The CCD 118 receives images from a multilens assembly 102 having lenses 104, 106, and 108. Each lens 104, 106, 108 is formed to a unique curvature to provide a different focal point. The curvatures may be applied to each lens in whatever fashion best suits the cost of manufacturing and quality of optical performance. Further, the lenses 104, 106, 108 can be individual units or all could be moulded as a single piece of material. Those skilled in the art will recognize that while three lenses were used for ease of illustration, the number of lenses can be varied to suit a range of focal lengths, thereby accommodating the range of distances required to suit a particular application. Likewise, redundant lenses could be designed for high reliability systems or the like.

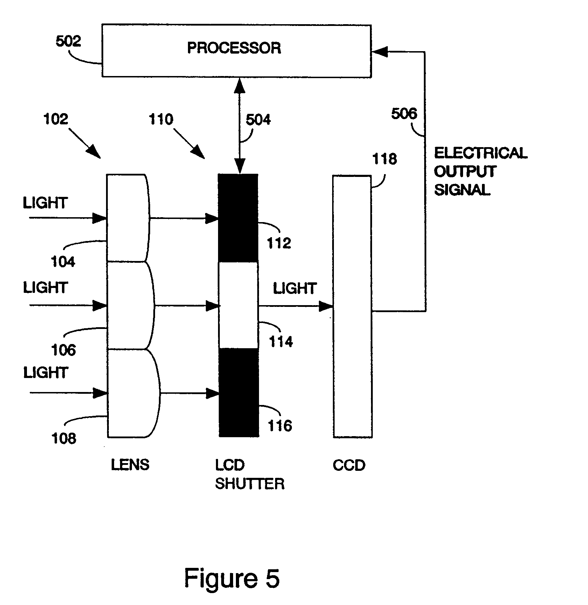

The LCD shutter 110 is an LCD mask designed to selectively block light from all but one of the lenses 104, 106, 108. Those skilled in the art will recognise that while the LCD shutter is shown disposed between the multilens assembly 102 and the CCD 118, it can be anywhere in the light path of the CCD and multilens assembly, such as the other side of the multilens assembly. Referring to Figure 5, control signals applied to the shutter by the processor 502 determine which window in the mask will be selected to allow light to pass through to the receptor. Figure 1 shows light from lens 106 passing through the LCD shutter 110 to CCD 118. As shown, the LCD shutter 110 can be instructed to block passage of light individually from the other two lenses 106, 108. In this way the LCD shutter 110 can scan through the curvatures of the lenses 104, 106, 108 until the one is found that best focuses the image being viewed onto the CCD 118. Thus the distance (depth of vision) over which the multilens system can focus objects onto the CCD 118 is increased over that achievable by a single lens alone.

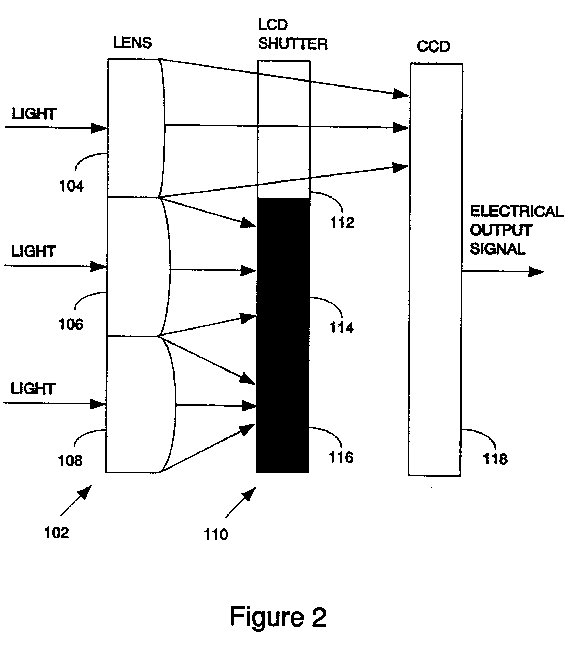

Figures 2-4 illustrate a single scan sequence operation in which an object is located at a distance best served by lens 106. For illustrative purposes, lens curvatures are shown on lenses 104, 106, and 108 in Figs. 2-4. However, the actual shape and curvature of the lens would be determined by the needs of the application through standard techniques which are well known in the art.

In Figure 2, the image is projected by each lens 104, 106, 108 onto the LCD shutter 110. Referring to Figure 5, the processor 502 causes the LCD shutter 110 to block passage of light through windows 114 and 116 and allows light to pass through window 112 to CCD 118. Returning to Figure 2, the focal length of lens 104 is such that the light does not converge properly on CCD 118, thereby leaving an image that is difficult to detect by CCD 118.

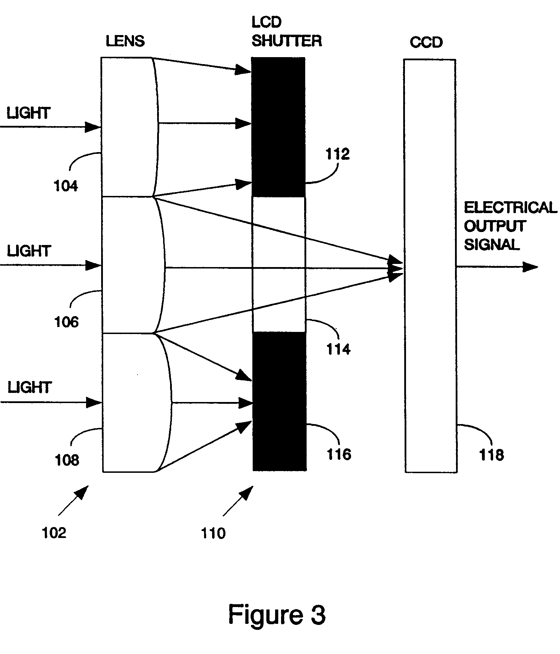

Figure 3 represents the next step in the sequence. The processor 502 has closed window 112, thereby preventing light passing through lens 104 from reaching CCD 118. Window 116 remains closed as it did in Figure 2. Window 114 is opened by processor 502 to permit light passing through lens 106 to reach CCD 118. As shown in Figure 3, the focal length of lens 106 is such that the image converges properly on CCD 118, thereby producing a detectable image which can be converted into a usable electrical output signal.

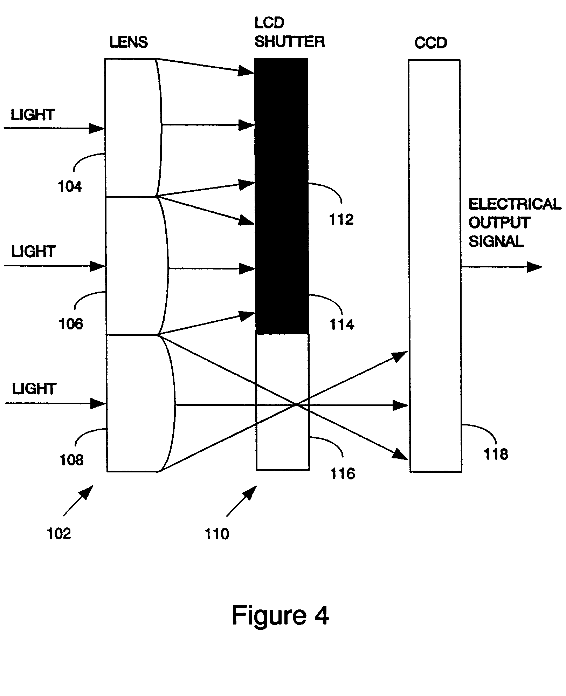

Figure 4 is similar to Fig. 2. In this step of the sequence, windows 112 and 114 are closed, blocking light passing through lenses 104 and 106, respectively. Window 116 is opened to allow light to pass from lens 108 to CCD 118. In this case, the focal length is too short, causing a poor image as in Figure 2.

Figure 5 shows the processor as it relates to the other components of the system. The LCD shutter 110 is controlled by processor 502 through control lines 504. As each window 112, 114, 116 is scanned, the output of CCD 118 on line 506 can be tested for a valid detected image. By varying the distance between the multilens assembly 102 and the bar code, the lens that is most appropriate will change. To avoid missing an image due to movement of the bar code or scanner, the scanning operation would be repetitive. Therefore, on subsequent scans a new lens may be selected by the processor 502 which would detect an image which was previously missed.

Once a valid image is detected, the processor 502 can terminate the scanning operation or continue depending on what is most convenient for the particular application. For example, if the scanning is being performed infrequently by a battery operated hand held device or the like, it may be more convenient to terminate scanning immediately. Likewise, in the situation where items on a conveyor belt are being scanned, it may be more convenient to leave the scanner running continuously.

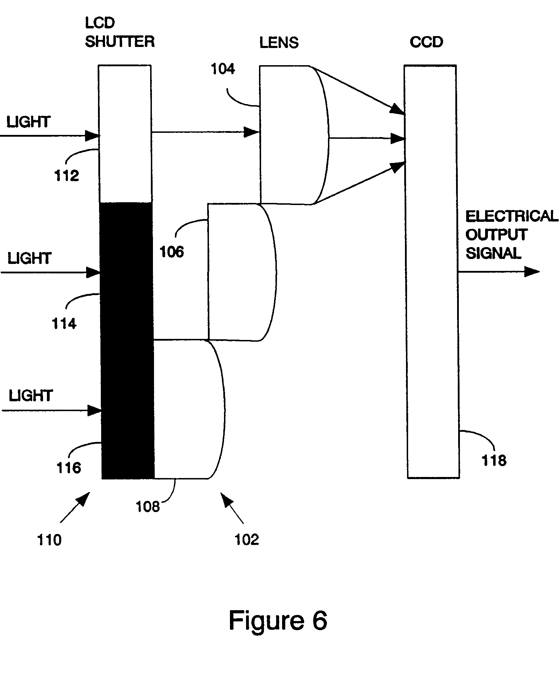

Figures 6-8 shown an alternate embodiment of the invention. As was the case with Figures 2-4, Figures 6-8 illustrate a single scan sequence operation in which an object is located at a distance best served by one lens 106. In this embodiment, all of the lenses have substantially the same curvature and optical properties. The difference in ability to detect bar codes at various distances is achieved by changing the distance between the lenses 104, 106, 108 and the CCD 118. Also, while Figures 2-4 show the LCD shutter 118 interposed between the CCD 118 and the multilens assembly 102, the embodiment illustrated by Figs. 6-8 shows the LCD shutter 110 on the other side of the multilens assembly 102. In either embodiment, the side of the multilens assembly 102 on which the LCD shutter 110 is located is not important so long as the LCD shutter 110 is capable of blocking the light path used by the apparatus. In addition, while LCD shutter 110 is drawn as a vertical bar for ease of illustration, those skilled in the art will recognize that in practice it would be more convenient to form LCD shutter 110 such that it was in substantially equal proximity with each lens 104, 106, 108 of multilens assembly 102.

In Figure 6, the first step of a scan sequence is illustrated. Window 112 in LCD shutter is opened by processor 502 while windows 114, 116 remain closed. Light from a bar code passing through window 112 does not focus properly on CCD 118 due to the distance from the bar code to the lens 104. In this sequence step, CCD 118 would not produce a valid output.

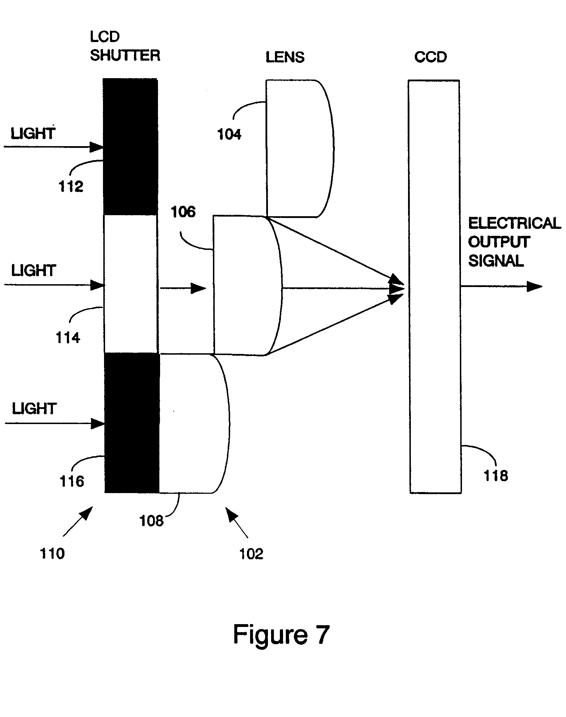

Figure 7 shows the next step in the scanning sequence. In this step, window 112 is closed, and window 114 is opened, light is allowed to pass through lens 106 to CCD 118. In this case CCD 118 produces a valid output because the image is focused properly on CCD 118.

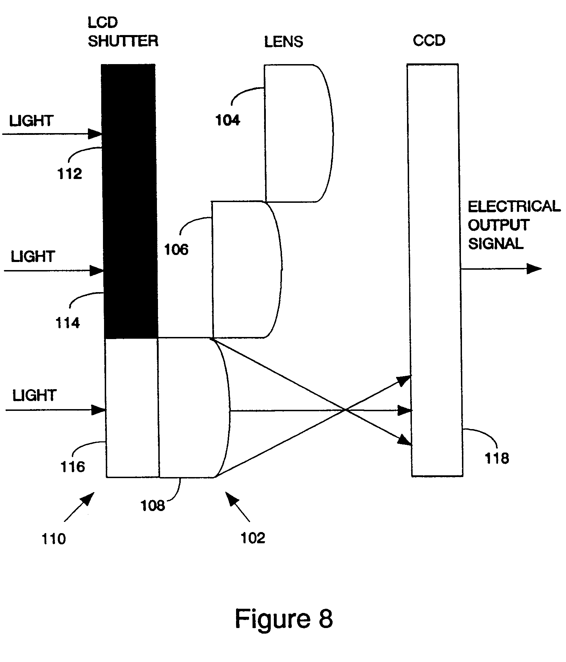

In Figure 8, the last step of the scan is shown. Windows 112 and 114 are closed while window 116 is opened. Light passes through lens 108 but does not focus correctly on CCD 118. Therefore, CCD 118 does not produce a valid output.

While the invention has been shown with respect to a preferred embodiment thereof, it will be understood by those skilled in the art that various changes in detail may be made therein without departing from the spirit, scope, and teaching of the invention. For example, multiple CCDs could be used for high reliability applications, as could multiple identical lens. Also, the visible light spectrum or non-visible spectrum (e.g. infrared, etc.,) could be used. Likewise, the LCD shutter could be directly controlled by the processor or free running (i.e. the scan control mechanism is in the LCD shutter assembly with the processor merely monitoring the scan) with the selected window being signalled to the processor. In addition, signal detection and LCD shutter control could easily be implemented in hardware and/or software. Finally, it would be clear to those skilled in the art that a combination of the two disclosed embodiments could be made in which some lenses with varying curvatures were located at the same distance to the CCD while other lenses with similar curvatures were located at different distances.

## Claims

1. Image recognition apparatus, comprising: an image receptor (118) comprising a surface for receiving an image and means for generating an electrical output signal (506) as a function of the image received on the surface; characterised in that the apparatus further comprises: a plurality of lenses (104, 106, 108) each for focusing the received image on the surface, each lens having a predetermined focal length; a shutter (110) located in the light path to the lenses (104, 106, 108) and the receptor (118), the shutter (110) having a plurality of addressable, electrically actuable windows (112, 114, 116), each window being individually operable to transmit or block light to a corresponding one of the lenses (104, 106, 108); and a processor (502) connected to the receptor (118) and the shutter (110) for sequentially actuating the windows (112, 114, 116) to determine the one of the lenses (104, 106, 108) providing the best available focal length for the received image as a function of the electrical output signal (506) from the receptor (118).

2. Apparatus, as claimed in claim 1, wherein the image receptor comprises a charge-coupled device.

3. Apparatus, as claimed in claim 1, wherein each of the lenses has a unique focal length.

4. Apparatus, as claimed in claim 3, wherein each of the lenses is substantially equal in distance to the image receptor.

5. Apparatus, as claimed in claim 1, wherein at least one of the lenses is located farther from the image receptor than at least one other of the lenses.

6. Apparatus, as claimed in claim 1, wherein the image receptor detects light in the visible light spectrum.

7. Apparatus, as claimed in claim 1, wherein the image receptor detects light in the invisible light spectrum.

8. Apparatus, as claimed in claim 1, wherein the image receptor detects light in the infrared light spectrum.

9. Apparatus, as claimed in claim 1, wherein the shutter comprises a liquid crystal.

10. A method of detecting images with a single image receptor, comprising: scanning a plurality of LCD windows in an LCD shutter to sequentially open light paths for a plurality of lenses in the light path of an image receptor; detecting a valid image when a lens with a usable focal length is selected; outputting a valid image signal when the lens having a usable focal length is scanned.
